# EUROPEAN PATENT APPLICATION

(11) **EP 1 998 536 A2**
(43) Date of publication of application: **03.12.2008**
(21) Application number: 08004156.9
(22) Date of filing: 06.03.2008
(51) Int. Cl.: H04M 1/67, H04M 1/73, G06F 15/02

(54) **Detection of accidental key pressings**

(30) Priority: 28.05.2007 JP 2007140696
(71) Applicant: Kabushiki Kaisha Toshiba, Minato-ku, Tokyo 105-8001 (JP)
(72) Inventor: Ozaki, Taichi, Tokyo 105-8001 (JP)
(74) Representative: HOFFMANN EITLE

(57) **Abstract**

If the key of the key operation unit (60) is continuously pushed down for not less than 3 minutes in a state in which the pushdown can hardly be considered as a user operation, the control unit (100) distinguishes this pushdown from the long-time key operation.and executes the battery saving processes. Even if the pushdown is continued, the control unit (100) turns off the backlight and the key illumination light and stops the key scanning process of reading a key status of the key operation unit (60) as detected by the key controller (70).

## Description

The present invention relates to a portable electronic device such as a cellular telephone.

A portable electronic device such as a cellular telephone is often carried while being in a pocket of clothes, a bag or the like since it is small and lightweight.

However, when the portable electronic device is in a pocket of clothes, a bag or the like, a problem occurs that a key switch remains pushed down and a backlight thereby remains turned on, which causes the battery to be remarkably wasted. To solve this problem, a key is structurally modified to be hardly pushed down and operation errors are thereby prevented (cf., for example, Jpn. Pat. Appln. KOKAI Publication No. 2001-216869).

In a conventional portable electronic device, (even in a case of structurally preventing operation errors in pushing down keys) the battery may be wasted by sequential key operations which are not intended by the user. This problem is still more serious in a case where operation errors in pushing down keys are not prevented structurally.

The present invention has been accomplished to solve the above-described problems. The object of the present invention is to provide a portable electronic device capable of preventing the battery from being wasted even if successive key operations which are not intended by the user are carried out.

To achieve this object, an aspect of the present invention is a portable electronic device, comprising: an input unit configured to accept user's requests; a display unit configured to display information; a detection unit configured to detect an accepting state of the input unit; a display control unit configured to urge the display unit to display information in accordance with a result of detection of the detection unit; and a detection control unit configured to stop the detection of the detection unit if the detection unit accepts the successive requests for more than a preset time.

In the present invention, when the requests are successively accepted via the input unit for more than a preset time, the accepting state of the input unit is not detected.

Therefore, even if a key switch remains pushed down since the portable electronic device is in a pocket or a bag, such an operation is accepted tacitly. However, remarkable waste of the battery caused by the turn-on operation of the backlight or the like can be prevented by the portable electronic device.

The invention can be more fully understood from the following detailed description when taken in conjunction with the accompanying drawings, in which:
FIG. 1 is a block diagram showing a configuration of a mobile radio terminal according to an embodiment of the present invention;
FIG. 2 is a flowchart describing a control flow of ASIC in the mobile radio terminal shown in FIG. 1;
FIG. 3 is an illustration showing an outer appearance of the mobile radio terminal shown in FIG. 1;
FIG. 4 is an illustration showing an outer appearance of the mobile radio terminal shown in FIG. 1;
FIG. 5 is a flowchart describing a control flow of the mobile radio terminal shown in FIG. 1;
FIG. 6 is a flowchart describing a control flow of the mobile radio terminal shown in FIG. 1;
FIG. 7 is a flowchart describing a control flow of the mobile radio terminal shown in FIG. 1; and
FIG. 8 is a flowchart describing a control flow of the mobile radio terminal shown in FIG. 1.

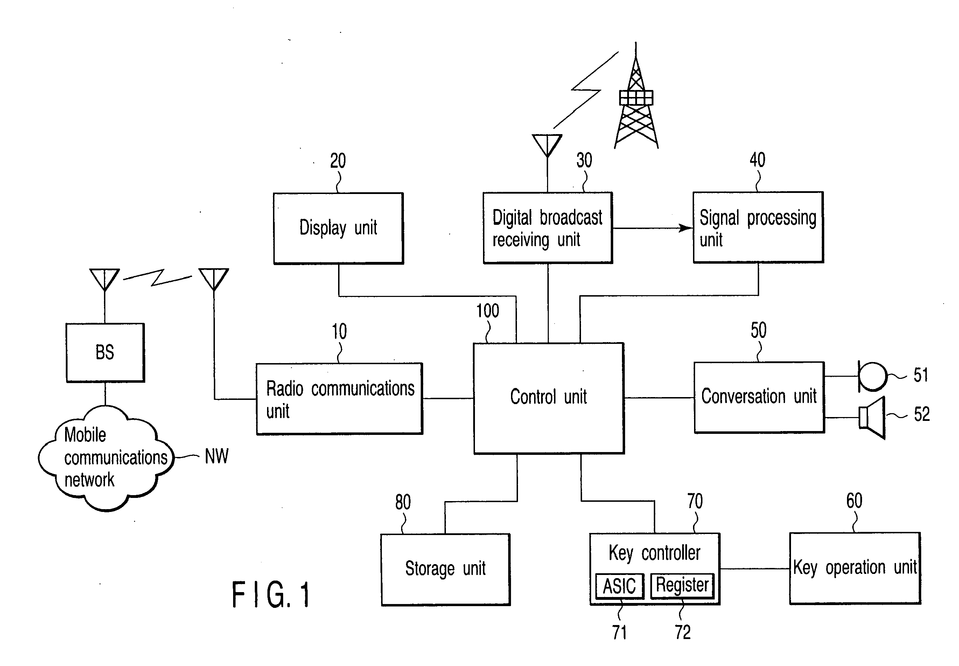

An embodiment of the present invention will be described below with reference to the accompanying drawings. A mobile radio terminal according to the present invention comprises as its main constituent elements, a radio communications unit 10, a display unit 20, a digital broadcast receiving unit 30, a signal processing unit 40, a conversation unit 50, a key operation unit 60, a key controller 70, a storage unit 80 and a control unit 100, as shown in FIG. 1.

The radio communications unit 10 establishes radio communications with base station BS accommodated in a mobile communications network NW of a cellular telephone system, under a direction of the control unit 100.

The display unit 20 comprises an LCD (Liquid Crystal Display) and a backlight, and controls the LCD to display images (still images and moving images), character information and the like and visually transmit the information to the user, under an instruction of the control unit 100. In addition, the display unit 20 turns on the backlight and illuminates the LCD under a turn-on instruction from the control unit 100, to enhance visibility of the information displayed on the LCD. Under a turn-off direction from the control unit 100, the display unit 20 turns off the backlight. The backlight can be turned on at a first illumination level and a second illumination level darker than the first illumination level, under control of the control unit 100.

The digital broadcast receiving unit 30 receives broadcast waves such as ground digital broadcast and the like under an instruction from the control unit 100, and outputs the received broadcast signal to the signal processing unit 40. The signal processing unit 40 processes the broadcast signal received by the digital broadcast receiving unit 30, restores the broadcast signal to video data and audio data, and outputs the data to the control unit 100, under an instruction from the control unit 100.

The conversation unit 50 comprises a microphone 51 which converts speech transmitted by the user into an electric signal, an encoding unit which encodes and converts the electric signal into audio data, a decoding unit which decodes and converts the audio data received from the communications partner into an electric signal, a speaker 52 which outputs the electric signal, and the like.

The key operation unit 60 comprises a plurality of key switches and key illumination lights. In response to the user operation of the key switch (for example, pushing down the key), the key operation unit 60 outputs an electric signal (hereinafter called a key signal) of a predetermined voltage indicating the user operation to the key controller 70 to notify the user of the occurrence of the user operation. If there is no key operation, the key operation unit 60 outputs an electric signal of a different voltage (for example, Hi) from the above voltage (for example, Low). The key illumination lights can be turned on at the first illumination level and the second illumination level darker than the first illumination level, under control of the control unit 100.

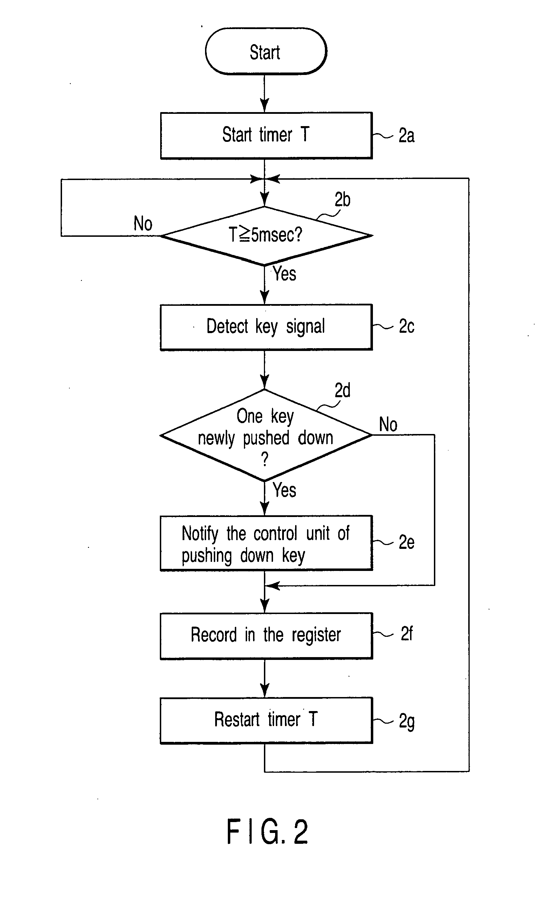

The key controller 70 comprises an ASIC (application specific integrated circuit) 71 and a register 72. The register 72 stores ON/OFF status of each key switch (hereinafter called key status) of the key operation unit 60. The ASIC 71 activates simultaneously with the power-on of the mobile radio terminal, and repeatedly executes a key scanning process shown in FIG. 2 until the power is turned off.

First, the ASIC 71 starts timer T in step 2a, and then proceeds to step 2b.

In step 2b, the ASIC 71 discriminates whether or not the timer T counts five milliseconds or more. If the timer T counts five milliseconds or more, the ASIC 71 proceeds to step 2c. If the timer T counts less than five milliseconds, the ASIC 71 proceeds to step 2d.

The ASIC 71 detects a key signal supplied from the key operation unit 60 in step 2c, and then proceeds to step 2d.

In step 2d, the ASIC 71 discriminates whether or not a new key is pushed down and the key remains pushed down, on the basis of the key status of each of the key switches recorded in the register 72 and a result of detection in step 2c. If the new key is pushed down and remains pushed down, the ASIC 71 proceeds to step 2e. If the same key continues being pushed down, a new key is not pushed down or two or more keys are pushed down, the ASIC 71 proceeds to step 2f.

In step 2e, to notify the control unit 100 of the newly pushed key, the ASIC 71 notifies the control unit 100 of the information for identifying the key. Then, the ASIC 71 proceeds to step 2f.

In step 2f, the ASIC 71 records the information indicating the key status of each key in the register 72, on the basis of the key signal detected in step 2c. The ASIC 71 proceeds to step 2g. For example, as for the key whose key signal indicating the key operation has been detected, the ASIC 71 records "1" as a value indicating that the operation is made, and records "0" as a value indicating that the operation is not made in the register 72 which could not detect the key signal. Thus, the ASIC 71 reflects the current key status on the register 72.

In step 2g, the ASIC 71 restarts the timer T. Then, the ASIC 71 proceeds to step 2b.

The discrimination in step 2d is not limited to this. The ASIC 71 may proceed to step 2e if the ASIC 71 discriminates whether or not "any key is pushed down in a state in which none of the keys is pushed down" and if any key is pushed down in a state in which none of the keys is pushed down, and may proceed to step 2f if not.

The storage unit 80 stores control programs and control data of the control unit 100, application software, address data in which names, telephone numbers and the like of communications partners are associated, data of transmitted and received electronic mails, Web data downloaded by Web browsing, downloaded streaming data, recording data based on broadcast signals, and the like.

The control unit 100 comprises a microprocessor, operates the control programs and control data stored in the storage unit 80, and controls all the units of the mobile radio terminal, to implement speech communications and data communications. In addition, the control unit 100 operates according to the application software stored in the storage unit 80, and comprises a communication control function of executing transmission and reception of electronic mails, Web browsing, displaying moving images on the display unit 20 on the basis of the downloaded streaming data, and speech communications.

In addition, the control unit 100 comprises a timer function of measuring the date and time, besides a function of controlling the digital broadcast receiving unit 30 and the signal processing unit 40 to receive a broadcast signal, display an image based on the broadcast signal on the display unit 20 and output a speech signal from the speaker 52.

Moreover, the control unit 100 comprises a key scanning function of reading a key status stored in the register 72 of the key controller 70 every 5 ms, for example, to discriminate a request from the user and the like and execute various kinds of operations on the basis of the key status read by the key scanning function.

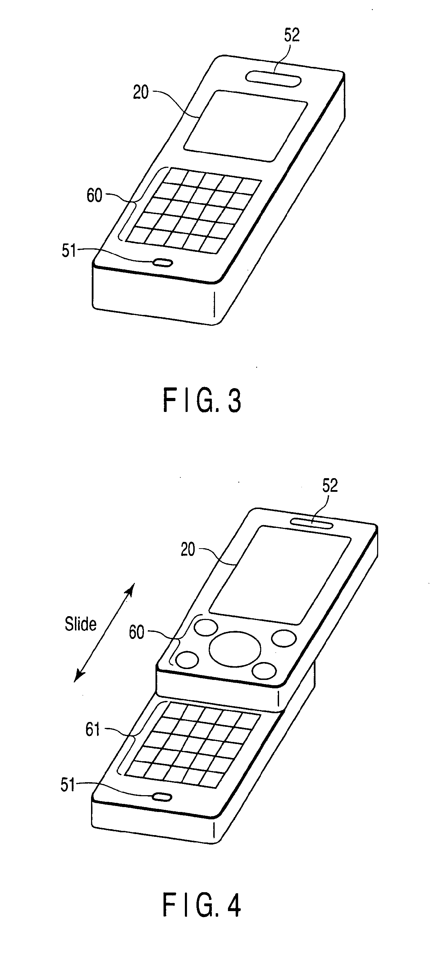

FIG. 3 and FIG. 4 show outer appearances of the mobile radio terminal shown in FIG. 1. FIG. 3 shows what is called a bar-type cellular telephone with a shape unchanged. The key operation unit 60 is exposed at any time. In the cellular telephone shown in FIG. 4, the housing is composed of two parts and a key operation unit 61 is exposed by a sliding operation. Otherwise, if a folding-type cellular telephone is shaped such that a part of the key operation unit 60 is exposed at any time, or an unexposed key is operated against the user's intention by applying an outer pressure to the housing, the present invention can be applied to the cellular telephone.

In addition, the present invention may be applied to the only key exposed to the outside. For example, in the sliding-type cellular telephone shown in FIG. 4, the present invention may be applied to the only key operation unit 60a since the only key operation unit 60a is exposed to the outside when the sliding part is closed. In addition, the present invention may be applied to both key operation units 60a and 60b when the sliding part is opened.

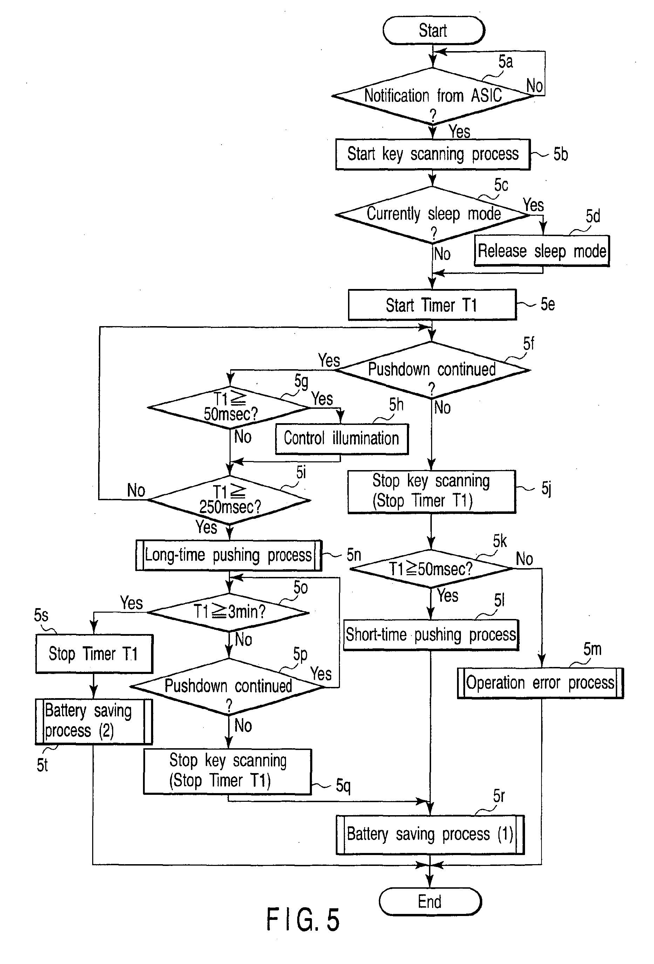

Next, operations of the mobile radio terminal having the above-described configuration are explained. In the following descriptions, the control function on the key operation unit 60 is particularly focused. FIG. 5 to FIG. 7 show flowcharts for explaining the control concerning the key operation executed by the control unit 100 at a wait time (when an incoming call is awaited, i.e. when communications are not executed). When the power of the mobile radio terminal is turned on, the process shown in the figures is repeatedly executed until the power is turned off, and the control program is recorded in the storage unit 80. Besides the process shown in FIG. 5 to FIG. 7, the control unit 100 simultaneously executes various kinds of processes if necessary, and the control programs thereof are also recorded in the storage unit 80.

First, in step 5a, the control unit 100 monitors occurrence of notification of pushing down the key from the ASIC 71. In other words, the control unit 100 discriminates whether the notification of pushing down the key is transmitted from the ASIC 71 in step 2e. If the key of the key operation unit 60 is pushed down and the notification of pushing down the key is transmitted from the ASIC 71 in step 2e, the control unit 100 proceeds to step 5b. If the key is not pushed down, the control unit 100 monitors again the notification to be transmitted from the ASIC 71 in step 5a.

The control unit 100 is not limited to this, but may first activate after receiving the notification of pushing down the key from the ASIC 71 and may not monitor the notification from the ASIC 71 at any time.

In step 5b, the control unit 100 starts a key scanning process. Then, the control unit 100 proceeds to step 5c. The key scanning process is a process of reading the key status stored in the register 72 of the key controller 70 every 5 milliseconds, and is executed by the control unit 100 simultaneously with the process shown in FIG. 5 to FIG. 7.

In step 5c, the control unit 100 discriminates whether or not a sleep mode is currently executed. If the sleep mode is currently executed, the control unit 100 proceeds to step 5d. If the sleep mode is not currently executed, the control unit 100 proceeds to step 5e. The sleep mode indicates a mode in which, for example, if control of transmitting and receiving the data and control displayed on the display unit 20 is not required, the timing of executing the general process, such as the timing of searching the signal received from the base station to discriminate whether or not an incoming call occurs (for example, approximately 5 seconds) is reduced to prevent supply of as much power as possible to the control unit 100.

The control unit 100 releases the sleep mode in step 5d, and proceeds to step 5e. The control unit 100 thereby changes the execution cycle of the cell search to the general cycle. After that, simultaneously with the process shown in FIG. 5, the control unit 100 controls the radio communications unit 10 to receive the radio signal of the notification channel transmitted from the cell (base station apparatus BS) every time the general cycle elapses.

The control unit 100 starts timer T1 to start measuring the elapsed time, in step 5e, and proceeds to step 5f.

In step 5f, the control unit 100 discriminates whether or not the key whose pushdown has been detected in step 5a still remains pushed down, on the basis of the key status read by the currently executed key scanning process. If the key still remains pushed down, the control unit 100 proceeds to step 5g. If the key is not pushed down, the control unit 100 proceeds to step 5j.

In step 5g, the control unit 100 discriminates whether or not the time measured by the timer T1 is not less than 50 milliseconds. If the time measured by the timer T1 is not less than 50 milliseconds, the control unit 100 proceeds to step 5h. If the measured time is less than 50 milliseconds, the control unit 100 proceeds to step 5i.

The control unit 100 turns on the backlight and the key illumination light at the first illumination level in step 5h, and proceeds to step 5i.

In step 5i, the control unit 100 discriminates whether or not the time measured by the timer T1 is not less than 250 milliseconds. If the time measured by the timer T1 is not less than 250 milliseconds, the control unit 100 proceeds to step 5n. If the measured time is less than 250 milliseconds, the control unit 100 proceeds again to step 5f and discriminates whether or not pushing down the key is continued.

In step 5j, the control unit 100 stops the key scanning process started in step 5b and stops the timer T1. Then, the control unit 100 proceeds to step 5k.

In step 5k, the control unit 100 discriminates whether or not the time measured by the timer T1 is not less than 50 milliseconds. If the time measured by the timer T1 is not less than 50 milliseconds, the.control unit 100 proceeds to step 51. If the measured time is less than 50 milliseconds, the control unit 100 proceeds to step 5m.

In step 51, the control unit 100 executes a short-time pushing process corresponding to the key whose pushdown has been detected in step 5a. Then, the control unit 100 proceeds to step 5r. The short-time pushing process is a process of accepting a general request associated with each key. For example, in the short-time pushing process of number key "1", an input request of number "1" is accepted and a process of displaying "1" on the display unit 20 is executed. In addition, for example, in the short-time pushing process of the menu key, a menu select screen is displayed on the display unit 20 and, after that, a process of accepting the menu selection is executed simultaneously with the process shown in FIG. 5. At this time, if the backlight and the key illumination light are turned off, they turned on at the first illumination level.

In step 5m, the control unit 100 discriminates that the key would have been instantaneously pushed down or a detection error or operation error would have occurred due to noise or the like, since the key whose pushdown has been detected in step 5a is pushed down for less than 50 milliseconds. Even if the backlight and the key illumination light are turned off, the control unit 100 does not turn on the backlight and the key illumination light and ends the process.

In step 5n, the control unit 100 executes a long-time pushing process corresponding to the key whose pushdown has been detected in step 5a. Then, the control unit 100 proceeds to step 50. The long-time pushing process is a process of accepting a request for execution of a specific function associated with each key. For example, in the long-time pushing process of number key "1", a request for alarm setting is accepted and the acceptance of alarm setting is displayed on the display unit 20. After that, a process of accepting the alarm setting is executed simultaneously with the display. In addition, for example, a manner mode is set in the long-time pushing process of the menu key. After that, if an incoming call occurs simultaneously with the process of FIG. 5, an incoming call notification process in the manner mode is executed. At this time, since the time measured by the timer T1 is more than 50 milliseconds, the backlight and the key illumination light have been turned on at the first illumination level in step 5h.

In step 5o, the control unit 100 discriminates whether or not the time measured by the timer T1 is not less than 3 minutes. If the time measured by the timer T1 is not less than 3 minutes, the control unit 100 proceeds to step 5s. If the measured time is less than 3 minutes, the control unit 100 proceeds to step 5p.

In step 5p, the control unit 100 discriminates whether or not the key whose pushdown has been detected in step 5a still remains pushed down, on the basis of the key status read by the currently executed key scanning process. If the key still remains pushed down, the control unit 100 proceeds to step 50. If the key is not pushed down, the control unit 100 proceeds to step 5q.

In step 5q, the control unit 100 stops the key scanning process started in step 5b and stops the timer T1. Then, the control unit 100 proceeds to step 5r.

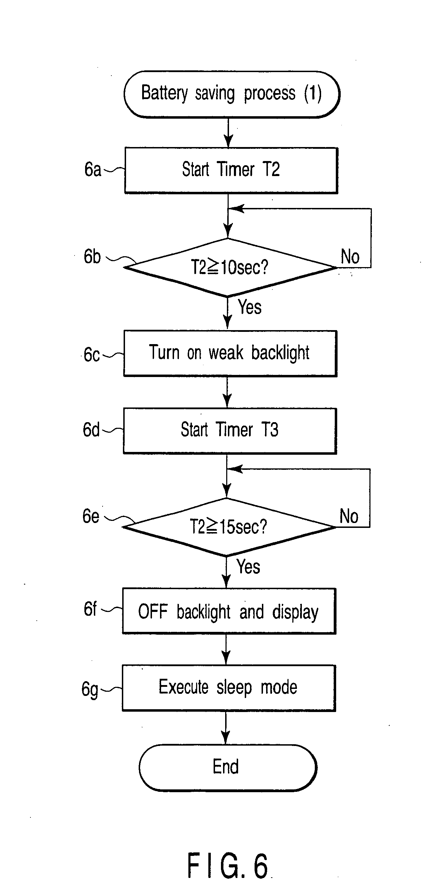

In step 5r, the control unit 100 executes a battery saving process (1) as shown in FIG. 6. Next, the battery saving process (1) in step 5r will be described with reference to FIG. 6. Simultaneously with this process, the control unit 100 monitors occurrence of the notification of pushing down the key from the ASIC 71. If the control unit 100 receives the notification, the control unit 100 immediately ends the battery saving process (1) and starts the process in step 5a. If the control unit 100 thus interrupts the battery saving process (1) and proceeds to step 5a, the control unit 100 quickly shifts from step 5a to step 5b and restarts key scanning.

First, in step 6a, the control unit 100 starts timer T2 and starts measuring an elapsed time. Then, the control unit 100 proceeds to step 6b.

In step 6b, the control unit 100 discriminates whether or not the time measured by the timer T2 is not less than 10 seconds. If the time measured by the timer T2 is not less than 10 seconds, the control unit 100 proceeds to step 6c. If the measured time is less than 10 seconds, the control unit 100 proceeds to step 6b and awaits until the measured time elapses for 10 seconds.

In step 6c, the control unit 100 changes the first illumination level of the backlight and the key illumination light to the weak illumination (second illumination level) darker than the first illumination level. Then, the control unit 100 proceeds to step 6d.

In step 6d, the control unit 100 starts timer T3 and starts measuring the elapsed time. Then, the control unit 100 proceeds to step 6e.

In step 6e, the control unit 100 discriminates whether or not the time measured by the timer T3 is not less than 15 seconds. If the time measured by the timer T3 is not less than 15 seconds, the control unit 100 proceeds to step 6f. If the measured time is less than 15 seconds, the control unit 100 proceeds to step 6e and awaits until the measured time elapses for 15 seconds.

In step 6f, the control unit 100 turns off the backlight and the key illumination light which have been weakly turned on and turns off the display on the display unit 20. The control unit 100 proceeds to step 6g.

In step 6g, the control unit 100 shifts to the sleep mode to await an incoming call by intermittent reception of a longer cycle than a general cycle, and ends the process. After that, the control unit 100 proceeds to step 5a.

The process will be explained again with reference to FIG. 5. The control unit 100 stops the timer T1 in step 5s, and proceeds to step 5t.

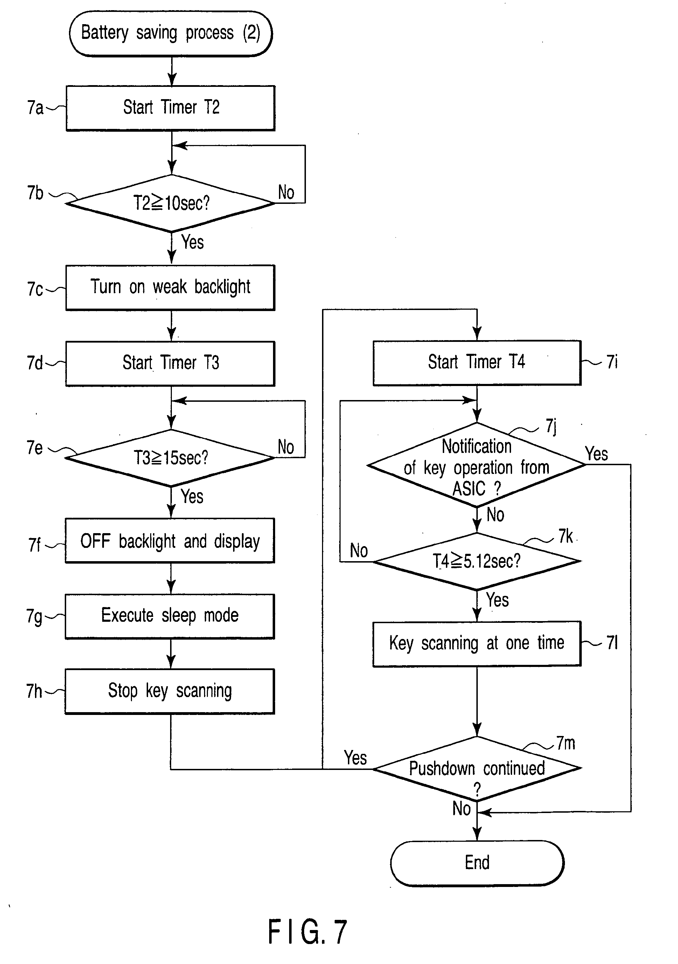

In step 5t, the control unit 100 executes a battery saving process (2) as shown in FIG. 7. The battery saving process (2) in step 5r will be described with reference to FIG. 7.

In the battery saving process (2), it is discriminated that the user would not have intended the pushdown continuing for not less than 3 minutes as detected in step 5a or the user could not have intentionally operated the key. Thus, the key scanning process of the control unit 100 is stopped to reduce the battery power consumption relating to the key operations. When the pushdown of key is continued for less than 3 minutes, it is discriminated that the mobile radio terminal would abut on the other object or be under something in a bag and thereby the key would be pushed by applying a stress thereto without user's intension. In this case, it is discriminated that the key would be released at this time.

Simultaneously with this process, the control unit 100 executes key scanning until step 7h to be described later. When the control unit 100 detects that the pushdown of key continued for not less than 3 minutes is changed to a state in which the key is not pushed down, on the basis of a result of the key scanning, the control unit 100 immediately ends the battery saving process (2) and starts the process from step 5a.

First, in step 7a, the control unit 100 starts timer T2 and starts measuring an elapsed time. Then, the control unit 100 proceeds to step 7b.

In step 7b, the control unit 100 discriminates whether or not the time measured by the timer T2 is not less than 10 seconds. If the time measured by the timer T2 is not less than 10 seconds, the control unit 100 proceeds to step 7c. If the measured time is less than 10 seconds, the control unit 100 proceeds to step 7b and awaits until the measured time elapses for 10 seconds.

In step 7c, the control unit 100 changes the first illumination level of the backlight and the key illumination light to the weak illumination (second illumination level) darker than the first illumination level. Then, the control unit 100 proceeds to step 7d.

In step 7d, the control unit 100 starts timer T3 and starts measuring the elapsed time. Then, the control unit 100 proceeds to step 7e.

In step 7e, the control unit 100 discriminates whether or not the time measured by the timer T3 is not less than 15 seconds. If the time measured by the timer T3 is not less than 15 seconds, the control unit 100 proceeds to step 7f. If the measured time is less than 15 seconds, the control unit 100 proceeds to step 7e and awaits until the measured time elapses for 15 seconds.

In step 7f, the control unit 100 turns off the backlight and the key illumination light which have been weakly turned on and turns off the display on the display unit 20. The control unit 100 proceeds to step 7g. In step 7f, 25 seconds are required until turn-off or display OFF. However, the process as executed in step 7f may be executed as soon as the battery saving process (2) is started.

In step 7g, the control unit 100 shifts to the sleep mode to await an incoming call by intermittent reception of a longer cycle than a general cycle. After that, the control unit 100 proceeds to step 7h.

In 7h, the control unit 100 stops the key scanning process started in step 5a. The control unit 100 proceeds to step 7i. The control unit 100 thereby stops the process of reading the key status stored in the register 72 of the key controller 70 every 5 seconds simultaneously with the battery saving process (2).

In 7i, the control unit 100 starts timer T4 and starts measuring the elapsed time. The control unit 100 proceeds to step 7j.

In 7j, the control unit 100 discriminates whether or not a notification of key operation has been sent from the ASIC 71. In other words, this notification corresponds to the notification in step 2e of the ASIC 71, the control unit 100 discriminates whether or not a key has been newly operated in a state in which no other keys have been operated. If the notification has been sent, the control unit 100 ends the battery saving process (2) and proceeds to step 5a. If the notification has not been sent, the control unit 100 proceeds to step 7k. In a case where the control unit 100 proceeds from step 7j to step 5a, the control unit 100 rapidly proceeds from step 5a to step 5b and restarts the key scanning in accordance with the notification of the key operation sent from the ASIC 71.

In step 7k, the control unit 100 discriminates whether or not the time measured by the timer T4 is not less than 5.12 seconds. If the time measured by the timer T4 is not less than 5.12 seconds, the control unit 100 proceeds to step 71. If the measured time is less than 5.12 seconds, the control unit 100 proceeds to step 7j.

In step 71, the control unit 100 reads the key status stored in the register 72 of the key controller 70. The control unit 100 proceeds to step 7m.

In step 7m, the control unit 100 discriminates whether or not the key whose pushdown has been detected in step 5b still remains pushed down, on the basis of the key status read in step 71. If the key still remains pushed down, the control unit 100 proceeds to step 7i. If the key is not pushed down, the control unit 100 ends the process and proceeds to step 5a.

In the battery saving process (2) shown in FIG. 7, the key scanning is executed every 5.12 seconds in steps 7i, 7k, 71 and 7m. Instead of this, however, for example, the control unit 100 may omit these steps; proceeds to step 7j after step 7h, await the notification to be sent from the ASIC 71, and not completely execute the key scanning.

As described above, for example, if the key is continuously pushed down for not less than 3 minutes in a state in which the pushdown can hardly be considered as a user operation, this pushdown is distinguished from the long-time key operation and the battery saving process (2) is executed. Even if the pushdown is continued, the backlight and the key illumination light are turned off, or the key scanning process is stopped by the control unit 100.

Therefore, even if key operations which are not intended to the user are successively executed, it is possible to prevent the backlight and the key illumination light from being unnecessarily turned on. In addition, since the key scanning for monitoring the key input is stopped by discriminating that the user operation is not in a condition of being executed, it is possible to prevent the battery from being wasted.

When the key is pushed down for a long time, the intermittent reception is executed in the sleep mode by discriminating that the user operation is not in a condition of being executed. It is therefore possible to start the battery saving in the sleep mode, on the basis of successive key operations that are not intended to the user.

Moreover, when the state in which no keys are pushed down is changed to the state in which only one switched is pushed down even if the key scanning is stopped, the ASIC 71 detects the change of state and notifies the change to the control unit 100 (steps 2d, 2e), and the control unit 100 receiving this notification restarts the key scanning (steps 7i, 5b). For this reason, even if the key scanning is stopped by the operation which is not intended to the user, the key scanning is restarted by executing a new key input by the user picking up the mobile radio terminal, and thereby the convenience is not damaged.

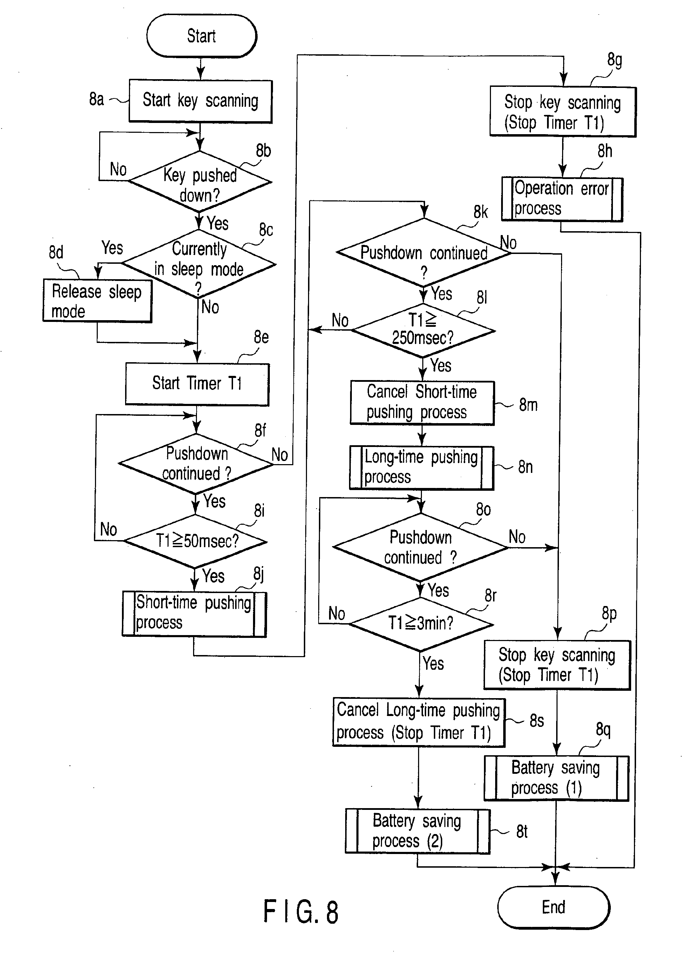

In the mobile radio terminal having the above-described configuration, the type of the user's request (short-time pushdown and long-time pushdown), and the key input caused by an operation error are discriminated and the operations corresponding thereto are executed, by the process shown in FIG. 5. Instead of this, however, a process shown in FIG. 8 may be executed. Another control process of the control unit 100 will be described below with reference to FIG. 8.

FIG. 8 is a flowchart showing a control on the key operation executed by the control unit 100 at the time of awaiting an incoming call. When the power of the mobile radio terminal is turned on, the process shown in FIG. 8 is repeated until the power is turned off. The control program is stored in the storage unit 80. Besides the process shown in FIG. 8, the control unit 100 necessarily executes various kids of processes simultaneously, and control programs thereof are also stored in the storage unit 80.

First, in step 8a, the control unit 100 starts a key scanning process. Then, the control unit 100 proceeds to step 8b. The key scanning process is a process of reading the key status stored in the register 72 o the key controller 70 every 5 seconds, and is executed by the control unit 100 simultaneously with the process shown in FIG. 8.

In step 8b, the control unit 100 discriminates whether or not the key of the key operation unit 60 has been pushed down, on the basis of the key status read in the currently executed key scanning process. If the key operation unit 60 has been pushed down, the control unit 100 proceeds to step 8c. If the key operation unit 60 has not been pushed down, the control unit 100 discriminates again in step 8b, after 5 milliseconds, whether or not the key of the key operation unit 60 has been pushed down, on the basis of the key status read in the currently executed key scanning process.

In step 8c, the control unit 100 discriminates whether or not a sleep mode is executed. If the sleep mode is currently executed, the control unit 100 proceeds to step 8d. If the sleep mode is not currently executed, the control unit 100 proceeds to step 8e. As described above, the sleep mode indicates a mode in which, for example, if control of transmitting and receiving the data and control displayed on the display unit 20 is not required, the timing of executing the general process, such as the timing of searching the signal received from the base station to discriminate whether or not an incoming call occurs (for example, approximately 5 seconds) is reduced to prevent supply of as much power as possible to the control unit 100.

The control unit 100 releases the sleep mode in step 8d, and proceeds to step 8e. The control unit 100 thereby changes the execution cycle of the cell search to the general cycle. After that, simultaneously with the process shown in FIG. 8, the control unit 100 controls the radio communications unit 10 to receive the radio signal of the notification channel transmitted from the cell (base station apparatus BS) every time the general cycle elapses.

In step 8e, the control unit 100 starts timer T1 to start measuring the elapsed time. The control unit 100 proceeds to step 8f.

In step 8f, the control unit 100 discriminates whether or not the key whose pushdown has been detected in step 8b still remains pushed down, on the basis of the key status read by the currently executed key scanning process. If the key still remains pushed down, the control unit 100 proceeds to step 8i. If the key is not pushed down, the control unit 100 proceeds to step 8g.

In step 8g, the control unit 100 stops the key scanning process started in step 8a and stops the timer T1. The control unit 100 proceeds to step 8h.

In step 8h, the control unit 100 discriminates that the key would have been instantaneously pushed down or a detection error or operation error would have occurred due to noise or the like, since the key whose pushdown has been detected in step 8b is pushed down for less than 50 milliseconds. Even if the backlight and the key illumination light are turned off, the control unit 100 does not turn on the backlight and the key illumination light.

In step 8i, the control unit 100 discriminates whether or not the time measured by the timer T1 is not less than 50 milliseconds. If the time measured by the timer T1 is not less than 50 milliseconds, the control unit 100 proceeds to step 8j. If the measured time is less than 50 milliseconds, the control unit 100 proceeds again to step 8f and discriminates whether or not the pushdown is continued.

In step 8j, the control unit 100 executes a short-time pushing process corresponding to the key whose pushdown has been detected in step 8b. Then, the control unit 100 proceeds to step 8k. The short-time pushing process is a process of accepting a general request associated with each key. For example, in the short-time pushing process of number key "1", an input request of number "1" is accepted and a process of displaying "1" on the display unit 20 is executed. If the backlight and the key illumination light are turned off, the control unit 100 turns on the backlight and the key illumination light at the first illumination level.

In addition, for example, in the short-time pushing process of the menu key, a menu select screen is displayed. At this time, if the backlight and the key illumination light are turned off, the control unit 100 turns on the backlight and the key illumination light at the first illumination level. The general illumination (first illumination level) of the backlight and the key illumination light are controlled to be turned on in step 8j is changed to the illumination (second illumination level) darker than the general illumination, for example, 5 seconds after they are turned on. After that, when 15 seconds further elapse, the control unit 100 controls the backlight and the key illumination light to be turned off.

In step 8k, the control unit 100 discriminates whether or not the key whose pushdown has been detected in step 8b still remains pushed down, on the basis of the key status read by the currently executed key scanning process. If the key still remains pushed down, the control unit 100 proceeds to step 81. If the key is not pushed down, the control unit 100 proceeds to step 8p.

In step 81, the control unit 100 discriminates whether or not the time measured by the timer T1 is not less than 250 milliseconds. If the time measured by the timer T1 is not less than 250 milliseconds, the control unit 100 proceeds to step 8m. If the measured time is less than 250 milliseconds, the control unit 100 proceeds again to step 8k and discriminates whether or not the pushdown is continued.

In step 8m, the control unit 100 discriminates that the request for the short-time pushing process is not made any longer by considering that the pushdown continuation time is not less than 250 milliseconds, and executes a process of canceling the short-time pushing process executed in step 8j. Then, the control unit 100 proceeds again to step 8n. In this cancellation process, for example, if input of "1" is accepted and displayed by the short-time pushing process executed in step 8j, the control unit 100 cancels the display of "1". For example, if the menu selection screen is displayed on the display unit 20, the control unit 100 stops the display of the menu selection screen.

In step 8n, the control unit 100 executes a long-time pushing process corresponding to the key whose pushdown has been detected in step 8b. Then, the control unit 100 proceeds to step 8o. The long-time pushing process is a process of accepting a request for execution of a specific function associated with each key. For example, in the long-time pushing process of number key "1", à request for alarm setting is accepted and the acceptance of alarm setting is displayed on the display unit 20. After that, a process of accepting the alarm setting is executed simultaneously with the display. In addition, if the backlight and the key illumination light are turned off, the control unit 100 turns on the backlight and the key illumination light at the first illumination level.

In addition, for example, a manner mode is set in the long-time pushing process of the menu key. After that, if an incoming call occurs simultaneously with the process of FIG. 8, an incoming call notification process in the manner mode is executed. A this time, if the backlight and the key illumination light are turned off, the control unit 100 turns on the backlight and the key illumination light at the first illumination level. The general illumination (first illumination level) of the backlight and the key illumination light are controlled to be turned on in step 8n is changed to the illumination (second illumination level) darker than the general illumination, for example, 5 seconds after they are turned on. After that, when 15 seconds further elapse, the control unit 100 controls the backlight and the key illumination light to be turned off.

In step 8o, the control unit 100 discriminates whether or not the key whose pushdown has been detected in step 8b still remains pushed down, on the basis of the key status read by the currently executed key scanning process. If the key still remains pushed down, the control unit 100 proceeds to step 8r. If the key is not pushed down, the control unit 100 proceeds to step 8p.

In step 8p, the control unit 100 stops the key scanning process started in step 8a and stops the timer T1. Then, the control unit 100 proceeds to step 8q.

In step 8q, the control unit 100 executes a battery saving process (1) as shown in FIG. 6. Simultaneously with this process, the control unit 100 monitors occurrence of the notification of pushing down the key from the ASIC 71. If the control unit 100 receives the notification, the control unit 100 immediately ends the battery saving process (1) and starts the process from step 8a.

In step 8r, the control unit 100 discriminates whether or not the time measured by the timer T1 is not less than 3 minutes. If the time measured by the timer T1 is not less than 3 minutes, the control unit 100 proceeds to step 8s. If the measured time is less than 3 minutes, the control unit 100 proceeds again to step 80 and discriminates whether or not the pushdown is continued.

In step 8s, the control unit 100 discriminates that the key has already been released, by considering that the pushdown continuation time is not less than 3 minutes, stops the timer T1 and proceeds to step 8t.

In step 8t, the control unit 100 discriminates that the user would not have intended the pushdown continuing for not less than 3 minutes as detected in step 8b or the user could not have intentionally operated the key. Thus, the backlight and the key illumination light are turned off and the key scanning process of the control unit 100 is stopped to reduce the battery power consumption relating to the key operations, and this process is ended.

When the pushdown of key is continued for less than 3 minutes, it is discriminated that the mobile radio terminal would abut on the other object or be under something in a bag and thereby the key would be pushed by applying a stress thereto without user's intension. In this process, for example, when the display of accepting the alarm setting is executed in the long-time pushing process executed in step 8n, the display of accepting the alarm setting is canceled. In addition, for example, setting of the manner mode is executed, a display based on the setting is canceled. The detailed example of step 8t is the same as that in FIG. 7.

Even in the above-described process, for example, if the key is continuously pushed down for not less than 3 minutes in a state in which the pushdown can hardly be considered as a user operation, this pushdown is distinguished from the long-time key operation and the battery saving processes are executed. Even if the pushdown is continued, the backlight and the key illumination light are turned off, or the key scanning process is stopped by the control unit 100.

Therefore, even if key operations which are not intended to the user are successively executed, it is possible to prevent the backlight and the key illumination light from being unnecessarily turned on. In addition, since the key scanning for monitoring the key input is stopped by discriminating that the user operation is not in a condition of being executed, it is possible to prevent the battery from being wasted.

When the key is pushed down for a long time, the intermittent reception is executed in the sleep mode by discriminating that the user operation is not in a condition of being executed. It is therefore possible to start the battery saving in the sleep mode, on the basis of successive key operations that are not intended to the user.

The present invention is not limited to the embodiments described above but the constituent elements of the invention can be modified in various manners without departing from the spirit and scope of the invention. Various aspects of the invention can also be extracted from any appropriate combination of a plurality of constituent elements disclosed in the embodiments. Some constituent elements may be deleted in all of the constituent elements disclosed in the embodiments. The constituent elements described in different embodiments may be combined arbitrarily.

For example, the above-described embodiment is directed to a mobile radio terminal, i.e. a cellular telephone but is not limited thereto. The present invention can be applied to an electronic dictionary, an electronic notebook, PDA (Personal Digital Assistants), a potable game machine and the like. In addition, the key operation unit 60 comprising the key switch is described above as the user interface. However, the operation which is not intended to the user can be executed in the same process with the touch panel provided by the display unit 20 or the touch pad provided on the housing, and the same advantage can be expected.

Otherwise, the present invention can be variously modified within a scope which does not depart from the gist of the present invention.

## Claims

1. A portable electronic device, **characterized by** comprising:
an input unit (60, 70) configured to accept user's requests;
a display unit (20) configured to display information;
a detection unit (100) configured to detect an accepting state of the input unit;
a display control unit (100) configured to urge the display unit to display information in accordance with a result of detection of the detection unit; and
a detection control unit (100) configured to stop the detection of the detection unit if the detection unit accepts the successive requests for more than a preset time.

2. The device according to claim 1, **characterized in that** the input unit (60, 70) comprises:
a plurality of switches (60) configured to accept the request by user's pushdown operations;
a state detection unit (71) configured to detects an ON/OFF state of each of the plurality of switches for a preset cycle;
a storage unit (70) configured to store a result of detection of the state detection unit; and
a notifying unit (71) configured to, if a state in which none of the switches is pushed down is changed to a state in which only one of the switches is pushed down, notifies the detection unit of occurrence of the request.

3. The device according to claim 2, **characterized in that** the detection unit (100) comprises:
a first detection unit configured to read the result of detection stored in the storage unit in a preset cycle and detects the accepting state; and
a second detection unit configured to detect the notification from the notifying unit, and
the detection control unit (100) stops the detection of the first detection unit if the first detection unit detects that the successive requests occur for more than the preset time, and then, restarts the detection of the first detection unit if the second detection unit detects the notification.

4. A portable electronic device, **characterized by** comprising:
an input unit (60, 70) configured to accept user's requests;
a display unit (20) configured to display information;
a detection unit (100) configured to detect an accepting state of the input unit; and
a display control unit (100) configured to urge the display unit to display information in accordance with a result of detection of the detection unit and which, if the detection unit accepts the successive requests for more than a preset time, stops the display of the information executed by the display unit in accordance with the request.

5. The device according to claim 4, **characterized in that** the input unit (60, 70) comprises:
a plurality of switches (60) to accept the requests by user's pushdown operations;
a state detection unit (71) configured to detects an ON/OFF state of each of the plurality of switches for a preset cycle;
a storage unit (70) configured to store a result of detection of the state detection unit; and
a notifying unit (71) configured to, if a state in which none of the switches is pushed down is changed to a state in which only one of the switches is pushed down, notifies the detection unit of occurrence of the requests.

6. The device according to claim 5, **characterized in that** the detection unit (100) comprises:
a first detection unit configured to read the result of detection stored in the storage unit in a preset cycle and detect the accepting state; and
a second detection unit configured to detect the notification from the notifying unit, and
the display control unit (100) stops the detection of the first detection unit and stops the display of the information executed by the display unit if the first detection unit detects that the successive requests occur for more than the preset time, and then, restarts the detection of the first detection unit if the second detection unit detects the notification.

7. A portable electronic device, **characterized by** comprising:
an input unit (60, 70) configured to accept user's requests;
a display unit (20) configured to display information;
an illuminating unit (20) configured to execute illumination;
a detection unit (100) configured to detect an accepting state of the input unit; and
an illumination control unit (100) configured to urge the illuminating unit to illuminate the display unit if the detection unit detects that the request is accepted, and which stops the illumination of the illuminating unit if the detection unit accepts the successive requests for more than a preset time.

8. The device according to claim 7, **characterized in that** the input unit (60, 70) comprises:
a plurality of switches (60) configured to accept the requests by user's pushdown operations;
a state detection unit (71) configured to detect an ON/OFF state of each of the plurality of switches for a preset cycle;
a storage unit (70) configured to store a result of detection of the state detection unit; and
a notifying unit (71) configured to notify the detection unit of occurrence of the request if a state in which none of the switches is pushed down is changed to a state in which only one of the switches is pushed down.

9. The device according to claim 8, **characterized in that** the detection unit comprises:
a first detection unit (100) configured to read the result of detection stored in the storage unit in a preset cycle and detect the accepting state; and
a second detection unit configured to detect the notification from the notifying unit, and
the illumination control unit (100) stops the detection of the first detection unit and stops the illumination of the illuminating unit if the first detection unit detects that the successive requests occur for more than the preset time, and then, restarts the detection of the first detection unit if the second detection unit detects the notification.

10. A portable electronic device, **characterized by** comprising:
an input unit (60, 70) configured to accept user's requests;
a display unit (20) configured to display information;
an illuminating unit (20) configured to execute illumination;
a detection unit (100) configured to detect an accepting state of the input unit; and
an illumination control unit (100) configured to urge the illuminating unit to execute the illumination at a first illumination level if the detection unit detects that the request is accepted, and which controls the illuminating unit to execute the illumination at a second illumination level lower tan the first illumination level if the detection unit accepts the successive requests for more than a preset time.

11. The device according to claim 10, **characterized in that** the input unit (60, 70) comprises:
a plurality of switches (60) configured to accept the requests by user's pushdown operations;
a state detection unit (71) configured to detect an ON/OFF state of each of the plurality of switches for a preset cycle;
a storage unit (70) configured to store a result of detection of the state detection unit; and
a notifying unit (71) configured to, if a state in which none of the switches is pushed down is changed to a state in which only one of the switches is pushed down, notifies the detection unit of occurrence of the requests.

12. The device according to claim 11, **characterized in that** the detection unit (100) comprises:
a first detection unit configured to read the result of detection stored in the storage unit in a preset cycle and detect the accepting state; and
a second detection unit configured to detect the notification from the notifying unit, and
the illumination control unit (100) stops the detection of the first detection unit and controls the illuminating unit to execute the illumination at the second illumination level lower than the first illumination level if the first detection unit detects that the successive requests occur for more than the preset time, and then, restarts the detection of the first detection unit if the second detection unit detects the notification.

13. A portable electronic device, **characterized by** comprising:
a communications unit (10) configured to establish radio communications;
an input unit (60, 70) configured to accept user's requests;
a detection unit (100) configured to detect an accepting state of the input unit; and
a communications control unit (100) configured to control the communications unit to receive a radio signal in a preset first cycle, and configured to control the communications unit to receive a radio signal in a second cycle longer than the first cycle if the detection unit accepts the successive request for more than a preset time.

14. The device according to claim 13, **characterized in that** the input unit (60, 70) comprises:
a plurality of switches (60) configured to accept the requests by user's pushdown operations;
a state detection unit (71) configured to detect an ON/OFF state of each of the plurality of switches for a preset cycle;
a storage unit (70) configured to store a result of detection of the state detection unit; and
a notifying unit (71) configured to, if a state in which none of the switches is pushed down is changed to a state in which only one of the switches is pushed down, notifies the detection unit of occurrence of the request.

15. The device according to claim 14, **characterized in that** the detection unit (100) comprises:
a first detection unit configured to read the result of detection stored in the storage unit in a preset cycle and detect the accepting state; and
a second detection unit configured to detect the notification from the notifying unit, and
the communications control unit (100) stops the detection of the first detection unit and controls the communications unit to receive the radio signal in the second cycle longer than the first cycle if the first detection unit detects that the successive requests occur for more than the preset time, and then, restarts the detection of the first detection unit if the second detection unit detects the notification.
